(19) Europäisches Patentamt
European Patent Office
Office européen des brevets

(11) **EP 4 675 886 A1**

(12) **DEMANDE DE BREVET EUROPEEN**

(43) Date de publication:
**07.01.2026 Bulletin 2026/02**

(21) Numéro de dépôt: **25186074.8**

(22) Date de dépôt: **27.06.2025**

(51) Classification Internationale des Brevets (IPC):
*H02J 7/02* $^{(2016.01)}$    *B60L 53/12* $^{(2019.01)}$
*H02J 50/12* $^{(2016.01)}$    *H02M 1/00* $^{(2006.01)}$
*H02M 7/219* $^{(2006.01)}$    *H02M 7/5387* $^{(2007.01)}$

(52) Classification Coopérative des Brevets (CPC):
**H02J 50/12; B60L 53/12; H02J 7/02; H02M 1/0043;
H02M 7/219; H02M 7/5387;** H02J 2207/20

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **01.07.2024 FR 2407166**

(71) Demandeur: **Valeo eAutomotive Germany GmbH
91056 Erlangen (DE)**

(72) Inventeur: **ALLALI, Nicolas
95892 Cergy Pontoise (FR)**

(74) Mandataire: **Valeo Powertrain Systems
Service Propriété Intellectuelle
Immeuble le Delta
14, avenue des Béguines
95892 Cergy Pontoise (FR)**

(54) **CIRCUIT D'ALIMENTATION ÉLECTRIQUE D'UNE UNITÉ DE STOCKAGE D'ÉNERGIE ÉLECTRIQUE DE VÉHICULE**

(57) Sous-circuit secondaire (6) pour l'alimentation électrique d'une unité de stockage d'énergie électrique (2), ce sous-circuit secondaire étant apte à échanger sans contact par couplage inductif de l'énergie électrique avec un sous-circuit primaire (4) apte à être connecté à un réseau de tension, et ce sous-circuit secondaire étant également apte à être connecté à une unité de stockage d'énergie électrique, ce sous-circuit comprenant :
- trois cellules inductives secondaires (20), aptes à échanger chacune de l'énergie électrique sans contact par couplage inductif avec une cellule inductive primaire (10) respective du sous-circuit primaire,
- un onduleur/redresseur (23), recevant sur son entrée alternative la tension triphasée correspondant aux trois cellules inductives secondaires (20) et recevant sur son entrée continue une tension apte à être connectée aux bornes de l'unité de stockage d'énergie électrique (2), l'onduleur/redresseur (23) comprenant une pluralité de bras de commutation (24) montés en parallèle, chaque bras de commutation (24) comprenant deux interrupteurs électroniques commandables (12) montés de part et d'autre d'un point milieu (25), et
- une unité de contrôle (3) configurée pour commander les interrupteurs électroniques commandables (12) des bras de commutation (24) de manière à réaliser une adaptation d'impédance de l'impédance sur l'entrée alternative de cet onduleur/redresseur (23), indépendamment de l'impédance de l'unité de stockage d'énergie électrique (2).

[Fig. 1]

**Description**

La présente invention concerne un circuit d'alimentation électrique sans contact d'une unité de stockage d'énergie électrique de véhicule.

L'unité de stockage d'énergie électrique présente par exemple une tension nominale de 12V, 48V, 60V ou plus, par exemple supérieure à 300V, par exemple de 400V, 800V ou 1000V.

Il est connu d'alimenter électriquement par échange sans contact par couplage inductif une unité de stockage d'énergie électrique de véhicule à une puissance comprise entre 3 et 50 kW, lorsque le véhicule est à l'arrêt ou lorsque celui-ci se déplace. Cette alimentation par échange sans contact se fait alors au moyen de sous-circuits électriques distants couplés magnétiquement et accordés à la même fréquence de résonance. Les sous-circuits couplés magnétiquement mettent chacun en œuvre une cellule résonante de type LC. Cependant, pour transmettre un niveau de puissance satisfaisant, notamment plusieurs kW, il faut opérer à des fréquences élevées, notamment de l'ordre de 85 kHz ou plus, pour la fréquence de résonance de chaque sous-circuit résonant. Il est souhaitable d'augmenter le rendement d'une telle alimentation par échange sans contact.

L'invention a pour objet de répondre à ce besoin et elle y parvient, selon l'un de ses aspects, à l'aide d'un sous-circuit secondaire pour l'alimentation électrique d'une unité de stockage d'énergie électrique, ce sous-circuit secondaire étant apte à échanger sans contact par couplage inductif de l'énergie électrique avec un sous-circuit primaire apte à être connecté à un réseau de tension, et ce sous-circuit secondaire étant également apte à être connecté à une unité de stockage d'énergie électrique, ce sous-circuit comprenant :

- trois cellules inductives secondaires, apte à échanger chacune de l'énergie électrique sans contact par couplage inductif avec une cellule inductive primaire respective du sous-circuit primaire,
- un onduleur/redresseur, recevant sur son entrée alternative la tension triphasée correspondant aux trois cellules inductives secondaires et recevant sur son entrée continue une tension apte à être connectée aux bornes de l'unité de stockage d'énergie électrique, l'onduleur/redresseur comprenant une pluralité de bras de commutation montés en parallèle, chaque bras de commutation comprenant deux interrupteurs électroniques commandables montés de part et d'autre d'un point milieu, et
- une unité de contrôle configurée pour commander les interrupteurs électroniques commandables des bras de commutation de manière à réaliser une adaptation d'impédance de l'impédance sur l'entrée alternative de cet onduleur/redresseur, indépendamment de l'impédance de l'unité de stockage d'énergie électrique.

Un tel sous-circuit secondaire mettant en œuvre trois cellules inductives secondaires présente un meilleur rendement que lorsque l'on utilise une seule cellule inductive secondaire.

La commande des bras de commutation par l'unité de contrôle peut permettre que la tension aux bornes de chaque cellule inductive secondaire soit égale au produit du courant circulant dans cette cellule inductive secondaire multiplié par la valeur de l'impédance de charge de référence.

Les trois cellules inductives secondaires peuvent être déphasées deux à deux de 120° électriques.

Au sens de la présente invention, lorsqu'un bras commute, chacun de ses deux interrupteurs électroniques commandables est ouvert et fermé de façon complémentaire avec la même fréquence de commutation.

Selon un premier exemple de mise en œuvre, les trois cellules inductives secondaires peuvent être disposées selon un montage en étoile. Un montage en étoile, comparé à un montage à ponts en H permet un coût réduit en termes d'interrupteurs électroniques commandables.

Selon une première variante de ce premier exemple de mise en œuvre, l'onduleur/redresseur peut comprendre trois bras de commutation, notamment uniquement trois bras de commutation, et chaque borne du montage en étoile peut être connectée à un point milieu respectif d'un des bras de commutation sans l'interposition d'une inductance.

Au sens de la présente demande, on désigne par « inductance » une inductance autre qu'une inductance parasite.

Selon une deuxième variante de ce premier exemple de mise en œuvre, l'onduleur/redresseur peut comprendre six bras de commutation, notamment uniquement six bras de commutation, chaque borne du montage en étoile peut être connectée à deux points milieux respectifs de deux bras de commutation avec interposition d'une inductance. Deux inductances sont par exemple associées à chaque borne du montage en étoile, chacune desdites bornes est alors reliée par l'une de ces deux inductances au point milieu d'un des deux bras de commutation et par l'autre de ces deux inductances au point milieu de l'autre des deux bras de commutation.

Selon un deuxième exemple de mise en œuvre, les trois cellules inductives secondaires peuvent être disposées selon un montage en triangle.

Un montage en triangle, comparé à d'autres montages tel qu'un montage en étoile ou un montage à ponts en H, permet à un coût réduit en termes d'interrupteurs électroniques commandables d'avoir une dynamique de tension sur l'entrée alternative de l'onduleur/redresseur plus élevée, et donc une valeur d'impédance sur cette entrée alternative plus élevée, si nécessaire.

Selon une première variante de ce deuxième exemple de mise en œuvre, l'onduleur/redresseur peut comprendre trois bras de commutation, notamment uniquement trois bras de commutation, chaque borne du montage en triangle étant connectée à un point milieu respectif d'un des bras de commutation sans l'interposition d'une inductance.

Selon une deuxième variante de ce deuxième exemple de mise en œuvre, l'onduleur/redresseur peut comprendre six bras de commutation, notamment uniquement six bras de commutation, chaque borne du montage en étoile peut être connectée à deux points milieux respectifs de deux bras de commutation avec interposition d'une inductance. Deux inductances sont par exemple associées à chaque borne du montage en triangle, chacune desdites bornes est alors reliée par l'une de ces deux inductances au point milieu d'un des deux bras de commutation et par l'autre de ces deux inductances au point milieu de l'autre des deux bras de commutation.

Selon un troisième exemple de mise en œuvre, l'onduleur/redresseur peut définir trois ponts en H, chaque pont en H comprenant deux bras de commutation, étant notamment constitué de deux bras de commutation, et étant dédié à une cellule inductive secondaire, la cellule inductive secondaire étant montée entre les points milieux des deux bras de commutation d'un pont en H respectif sans l'interposition d'une inductance. Un montage à ponts en H présente l'avantage par rapport à des montages en triangle ou en étoile de pouvoir piloter les trois phases indépendamment avec une impédance spécifique pour chaque phase.

Selon un quatrième exemple de mise en œuvre, l'onduleur/redresseur peut définir trois ponts en H, chaque pont en H comprenant trois bras de commutation, étant notamment constitué de trois bras de commutation, et étant dédié à une cellule inductive secondaire, ladite cellule inductive secondaire ayant :

- une première borne reliée à deux points milieux respectifs de deux des trois bras de commutation du pont en H avec interposition d'une inductance, et
- une deuxième borne reliée au point milieu de l'autre des trois bras de commutation du pont en H sans l'interposition d'une inductance.

Il y a ainsi deux inductances par pont en H.

Selon une variante de ce quatrième exemple de mise en œuvre, chaque pont en H comprend quatre bras de commutation, étant notamment constitué de quatre bras de commutation, et dédié à une cellule inductive secondaire, ladite cellule inductive secondaire ayant :

- une première borne reliée à deux points milieux respectifs de deux des quatre bras de commutation du pont en H avec interposition d'une inductance, et
- une deuxième borne reliée à deux points milieux respectifs de deux autres des quatre bras de commutation du pont en H avec interposition d'une inductance.

Il y a ainsi quatre inductances par pont en H.

Selon la première variante du premier exemple de mise en œuvre ou la première variante du deuxième exemple de mise en œuvre ou selon le troisième exemple de mise en œuvre, au moins un des bras de commutation dont le point milieu est relié à une borne du montage en étoile ou en triangle ou à une borne d'une cellule inductive secondaire peut comprendre au lieu d'un seul interrupteur électronique commandable de part et d'autre de son point milieu, plusieurs interrupteurs électroniques commandables en parallèle, notamment deux interrupteurs électroniques commandables en parallèle, de chaque côté de son point milieu. L'emploi de plusieurs interrupteurs électroniques commandables en parallèle permet de répartir la contrainte de conduction de courant et de commutation entre ces différents interrupteurs électroniques commandables. On obtient ainsi en pratique une diminution de la fréquence de commutation par interrupteur électronique commandable. On utilise ainsi des interrupteurs électroniques commandables moins complexes et/ou moins onéreux dans la cellule de commutation. Le cas échéant, chaque bras de commutation selon les variantes ou modes de réalisation ci-dessus peut comprendre plusieurs interrupteurs électroniques commandables en parallèle, notamment deux interrupteurs électroniques commandables en parallèle, de chaque côté de son point milieu. Ces bras de commutation avec plusieurs interrupteurs électroniques commandables de part et d'autre de leur point milieu sont par exemple réalisés selon l'enseignement de la demande FR 3 156 077.

Les différents interrupteurs électroniques commandables disposés en parallèle au sein d'un même bras de commutation peuvent être pilotés par une unité de commande telle que décrite dans cette demande FR 3 156 077. L'intérêt d'un tel montage est son coût réduit par rapport à un montage nécessitant davantage d'interrupteurs électroniques commandables complexes.

La présence d'une inductance entre :

- un point milieu d'un bras de commutation, et
- une borne d'une cellule inductive ou une borne d'un montage en étoile ou en triangle, pour un ou plusieurs bras de commutation, peut être réalisée conformément à l'enseignement de la demande déposée en France le 7 mai 2024 par la Déposante sous le numéro FR 2404802.

Selon la deuxième variante du premier exemple de mise en œuvre ou la deuxième variante du deuxième exemple de mise en œuvre, ou selon le quatrième exemple de mise en œuvre, les bras de commutation reliés à une même borne du montage en étoile ou du montage en triangle ou d'une borne de la cellule inductive secondaire par une inductance peuvent présenter un nombre égal à N et chacun de ces N bras peut être commandé de manière à commuter à une même fréquence et avec un décalage de phase de 360/N° d'un bras à l'autre. 360/N° représente ainsi le décalage d'angle électrique de commande d'un premier bras à l'autre. Le déphasage de 360/N° introduit entre ces bras de commutation permet à chaque inductance interposée entre le point de milieu de ce bras et, une borne du montage ou de la cellule inductive secondaire, d'être soumise à une tension alternative qui produit une ondulation du courant vu par les interrupteurs électroniques des N bras de commutation. En raison de cette ondulation de courant, les interrupteurs électroniques de ces N bras de commutation commutent vers l'état passant pour conduire un courant négatif, ce qui permet de réduire les pertes par commutation.

Selon ces deuxièmes variantes du premier et du deuxième exemple de mise en œuvre ou selon le quatrième exemple de mise en œuvre, on peut réaliser une adaptation d'impédance en faisant commuter ces N bras à des fréquences supérieures à celle de l'énergie électrique transmise sans contact par couplage inductif, par exemple à 5 fois ou 10 fois plus que 85 kHz, par exemple à quelques centaines de kHz, sans que les commutations pour ces hautes fréquences ne génèrent de pertes trop importantes. L'ondulation de courant n'affecte avantageusement pas la forme du courant circulant dans les cellules inductives secondaires, compte-tenu de la valeur choisie pour les inductances et de la fréquence de résonance des cellules inductives secondaires. On bénéficie ainsi des avantages apportés par l'adaptation d'impédance pour réduire, pour une valeur donnée de courant dans chaque cellule inductive secondaire, la valeur du courant circulant dans la cellule inductive primaire associée à cette cellule inductive secondaire, d'où une hausse du rendement de l'échange d'énergie électrique. Ces avantages restent disponibles, bien que l'adaptation d'impédance nécessite l'emploi de hautes fréquences de commutation dans les N bras de commutation, puisque les pertes par commutation sont significativement réduites.

Chaque inductance non-parasite a par exemple la même valeur comprise entre 100nH et 10µH.

N peut être égal à deux, trois, quatre ou plus.

Chacune des N inductances peut être dédiée à un bras respectif, de manière à relier le point milieu dudit bras à la borne du montage en étoile ou en triangle ou à une borne de la cellule inductive secondaire. Il y a ainsi une inductance pour chacun de ces bras de commutation.

Tout ou partie de ces inductances peuvent être magnétiquement couplées par l'intermédiaire d'un même noyau magnétique. On peut ainsi réduire le nombre de composants magnétiques nécessaires à l'implantation des inductances. En variante, les inductances ne sont pas couplées entre elles, ayant chacune un noyau magnétique qui lui est propre.

Dans la deuxième variante du premier ou du deuxième exemple de mise en œuvre ou dans le quatrième exemple de mise en œuvre, le sous-circuit secondaire peut comprendre un condensateur, en parallèle de chaque interrupteur électronique commandable appartenant à un bras de commutation dont le point milieu est relié à une borne du montage en étoile ou en triangle ou à une borne d'une cellule inductive secondaire par une inductance. La présence de ce condensateur, dont la valeur est par exemple comprise entre 100pF et 10nF, permet de réduire les pertes lors de la commutation de l'interrupteur électronique commandable correspondant vers l'état bloqué.

Dans tout ce qui précède, chaque cellule inductive secondaire peut être constituée par l'association en série d'un condensateur et d'une inductance.

En variante, dans tout ce qui précède, chaque cellule inductive secondaire peut être constituée par une inductance, les bras de commutation de l'onduleur/redresseur étant commandés de manière à ce chaque phase de la tension sur l'entrée alternative de cet onduleur/redresseur émule la présence d'un condensateur monté en série avec une cellule inductive secondaire. Une telle commande permettant d'obtenir cette émulation est décrite dans la demande FR 3 149 443.

Dans tout ce qui précède, chaque cellule inductive secondaire peut présenter une fréquence de résonance comprise entre 79 kHz et 90 kHz, étant notamment égale à 85 kHz.

Dans tout ce qui précède, le sous-circuit secondaire peut comprendre l'unité de stockage d'énergie électrique. Cette dernière peut être une batterie de type lithium-ion. Cette batterie a par exemple une tension nominale de 12V, 48V, 60V ou plus, par exemple supérieure à 300V, par exemple de 400V, 800V ou 1000V.

Selon l'un ou l'autre des exemples de mise en œuvre, le sous-circuit secondaire peut comprendre pour chaque cellule inductive secondaire l'un au moins :

- d'un condensateur monté entre la première borne de la cellule inductive secondaire et la masse,
- d'un condensateur monté entre la deuxième borne de la cellule inductive secondaire et la masse, et
- d'un condensateur monté entre la première borne de la cellule inductive secondaire et la deuxième borne de la cellule inductive secondaire.

Ce ou ces condensateurs permettent de filtrer les bruits hautes fréquences dans le sous-circuit secondaire.

Le cas échéant, chacun des trois condensateurs précités est simultanément présent dans le sous-circuit secondaire pour chaque cellule inductive secondaire.

Chaque condensateur monté entre une borne de la cellule inductive secondaire et la masse est par exemple une capacité X.

Le condensateur monté entre les deux bornes de la cellule inductive secondaire est par exemple une capacité Y.

Le cas échéant :

- un montage en série d'un condensateur et d'une résistance est monté en parallèle du condensateur monté entre la première borne de la cellule inductive secondaire et la masse, et/ou
- un montage en série d'un condensateur et d'une résistance est monté en parallèle du condensateur monté entre la deuxième borne de la cellule inductive secondaire et la masse, et/ou
- un montage en série d'un condensateur et d'une résistance est monté en parallèle du condensateur monté entre la première borne de la cellule inductive secondaire et la deuxième borne de la cellule inductive secondaire.

L'invention a encore pour objet, selon un autre de ses aspects, un circuit d'alimentation électrique d'une unité de stockage d'énergie électrique, ce circuit d'alimentation électrique comprenant :

- un sous-circuit primaire, apte à être connecté à un réseau de tension, et
- le sous-circuit secondaire tel que défini ci-dessus,

le sous-circuit primaire comprenant :

- trois cellules inductives primaires pour l'échange sans contact par couplage inductif d'énergie électrique avec une cellule inductive secondaire respective du sous-circuit secondaire, et
- un onduleur/redresseur comprenant au moins trois bras de commutation, chaque bras de commutation comprenant deux interrupteurs électroniques commandables disposés de part et d'autre d'un point milieu.

Chaque couple cellule inductive secondaire / cellule inductive primaire est avantageusement choisi de manière à ce que ces deux cellules présentent la même fréquence de résonance, notamment une fréquence de résonance comprise entre 79 kHz et 90 kHz, étant par exemple de l'ordre de 85 kHz.

Dans tout ce qui précède, chaque cellule inductive primaire peut être constituée par l'association en série d'un condensateur et d'une inductance. En variante, et similairement à ce qui a été mentionné en rapport avec la cellule inductive secondaire, chaque cellule inductive primaire peut être constituée par une inductance, les bras de commutation de l'onduleur/redresseur du sous-circuit primaire étant commandés de manière à ce chaque phase de la tension sur l'entrée alternative de cet onduleur/redresseur émule la présence d'un condensateur monté en série avec la cellule inductive primaire.

Le cas échéant, le sous-circuit primaire peut comprendre un autre onduleur/redresseur monté en amont de l'onduleur/redresseur aux points milieux duquel la cellule inductive primaire est montée, et cet autre onduleur/redresseur permet de redresser la tension alternative reçue du réseau lorsque la charge s'effectue depuis un réseau de tension alternative. Cet autre onduleur/redresseur peut alors réaliser une fonction de correction de facteur de puissance (« Power factor correction » en anglais). Une telle correction permet de façon connue que le courant prélevé sur le réseau soit le plus proche d'un sinus parfait à la pulsation du réseau. On réduit ainsi le courant réactif et les sous-harmoniques qui augmentent les pertes énergétiques en conduction.

La cellule inductive primaire peut être intégrée à un tapis de charge posé dans ou sur le sol, tel que décrit dans la demande FR 3 152 754.

Dans tout ce qui précède, le réseau électrique fournit par exemple une tension efficace nominale de 230V avec une fréquence de 50 Hz ou 60 Hz. Le réseau électrique est par exemple monophasé. Le réseau électrique est par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

En variante encore, le réseau électrique peut fournir une tension continue.

L'unité de contrôle peut commander les bras de commutation du sous-circuit primaire.

Dans tout ce qui précède, l'unité de contrôle peut être configurée pour commander les différents bras de commutation de manière à réaliser sélectivement :

- une charge de l'unité de stockage d'énergie électrique depuis le réseau de tension, ou
- une charge du réseau de tension ou de toute autre charge électrique côté réseau depuis l'unité de stockage d'énergie électrique.

Ainsi, en fonction du besoin, l'échange d'énergie électrique peut s'effectuer dans un sens ou dans l'autre.

Lorsque le circuit électrique permet une charge du réseau de tension ou de toute autre charge électrique côté réseau depuis l'unité de stockage d'énergie électrique, l'onduleur/redresseur du sous-circuit primaire peut présenter une structure identique à celle de l'onduleur/redresseur du sous-circuit secondaire.

Ainsi, lorsque l'onduleur/redresseur du sous-circuit secondaire présente une structure selon le premier, respectivement deuxième, respectivement troisième, respectivement quatrième exemple de mise en œuvre, l'onduleur/redresseur du sous-circuit primaire présente par exemple la même structure selon le premier, respectivement deuxième, respectivement troisième, respectivement quatrième, exemple de mise en œuvre.

Dans tout ce qui précède, chaque bras de commutation comprend des interrupteurs électroniques commandables, notamment exclusivement des interrupteurs électroniques qui sont commandables, et chaque interrupteur électronique commandable est par exemple un transistor, par exemple bipolaire, MOSFET ou IGBT, ou un thyristor. Le transistor MOSFET est par exemple réalisé à base de SiC. Il peut en variante s'agir d'un transistor à haute mobilité électronique (HEMT en anglais) à base de GaN. Chaque interrupteur électronique commandable est par exemple bidirectionnel.

Dans tout ce qui précède, l'unité de contrôle peut être un circuit de traitement numérique, par exemple un circuit intégré de type ASIC (« Application-specific integrated circuit » en anglais) ou un microcontrôleur. Cette unité de contrôle peut commander tous les bras de commutation du circuit électrique, qu'ils appartiennent au sous-circuit primaire ou au sous-circuit secondaire.

L'unité de contrôle peut en variante comprendre un module de commande du sous-circuit primaire et un module de commande du sous-circuit secondaire.

En variante encore, chaque sous-circuit présente une unité de contrôle qui lui est propre, cette dernière pouvant être un circuit de traitement numérique tel qu'un microcontrôleur.

L'invention a encore pour objet, selon un autre de ses aspects, un composant pour l'alimentation électrique d'une unité de stockage d'énergie électrique, comprenant le circuit électrique tel que défini ci-dessus, le composant définissant notamment une structure supportant de manière rigidement couplés entre eux le sous-circuit primaire et le sous-circuit secondaire. Un tel composant est couramment appelé « chargeur embarqué » (« on board charger » en anglais). Ce composant est apte à être embarqué dans un véhicule hybride ou électrique.

L'invention a encore pour objet, selon un autre de ses aspects, un dispositif pour l'alimentation électrique d'une unité de stockage d'énergie électrique, comprenant:

- une borne de charge pour véhicule hybride ou électrique, dans laquelle est disposé le sous-circuit primaire du circuit électrique tel que défini ci-dessus ou à laquelle ce sous-circuit primaire est électriquement connecté, et
- un composant apte à être embarqué dans un véhicule hybride ou électrique, dans lequel est disposé le sous-circuit secondaire du circuit électrique tel que défini ci-dessus.

Cette borne reçoit alors de l'énergie électrique d'un réseau électrique via un câble qui peut être un câble monophasé ou un câble triphasé. Dans ce cas, le circuit primaire et le circuit secondaire ne sont pas intégrés à un même composant physique.

Dans tout ce qui précède, les cellules inductives peuvent être configurée pour un échange d'énergie électrique entre le sous-circuit primaire et le sous-circuit secondaire selon une puissance dont la valeur est comprise entre 3 kW et 50 kW, par exemple une puissance dont la valeur est égale à 7 kW ou 11 kW.

L'invention pourra être mieux comprise à la lecture de la description qui va suivre d'exemples non-limitatifs de mises en œuvre de celle-ci et à l'examen du dessin annexé sur lequel :

[Fig.1] représente de façon schématique un circuit d'alimentation électrique comprenant un sous-circuit secondaire selon une première variante d'un premier exemple de mise en œuvre de l'invention,

[Fig.2] représente de façon schématique un sous-circuit secondaire d'un circuit d'alimentation électrique selon une deuxième variante du premier exemple de mise en œuvre de l'invention,

[Fig.3] représente de façon schématique un sous-circuit secondaire d'un circuit d'alimentation électrique selon une première variante d'un deuxième exemple de mise en œuvre de l'invention,

[Fig.4] représente de façon schématique un sous-circuit secondaire d'un circuit d'alimentation électrique selon une deuxième variante du deuxième exemple de mise en œuvre de l'invention,

[Fig.5] représente de façon schématique un sous-circuit secondaire d'un circuit d'alimentation électrique selon un troisième exemple de mise en œuvre de l'invention,

[Fig.6] représente de façon schématique un sous-circuit secondaire d'un circuit d'alimentation électrique selon une première variante d'un quatrième exemple de mise en œuvre de l'invention, et

[Fig.7] représente de façon schématique un sous-circuit secondaire d'un circuit d'alimentation électrique selon une deuxième variante du deuxième exemple de mise en œuvre de l'invention.

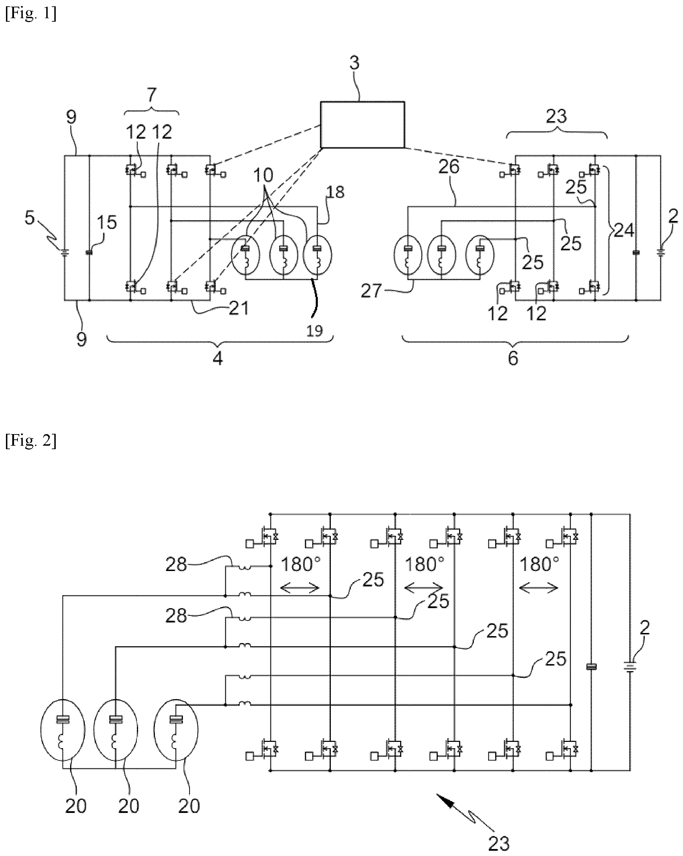

On a représenté sur la figure 1, un circuit d'alimentation électrique 1 d'une unité de stockage d'énergie électrique 2. Cette unité de stockage d'énergie électrique 2 est par exemple une batterie de véhicule, pouvant présenter une tension nominale de 48V, 60V, 300V, 400V, 800V ou plus. Cette batterie sert à alimenter un système de propulsion de véhicule électrique ou hybride.

Ce circuit d'alimentation électrique comprend:

- une unité de contrôle 3,
- un sous-circuit primaire 4, apte à être connecté à un réseau de tension 5, et
- un sous-circuit secondaire 6, comprenant l'unité de stockage d'énergie électrique 2.

Le circuit d'alimentation électrique 1 met en œuvre un échange d'énergie électrique sans contact par couplage inductif entre le sous-circuit primaire 4 et le sous-circuit secondaire 6, pour la charge de l'unité de stockage d'énergie électrique 2.

L'unité de contrôle 3 est par exemple un microcontrôleur ou toute unité de traitement numérique.

Dans l'exemple considéré, le sous-circuit primaire 4 comprend :

- un connecteur 9 apte à être branché au réseau électrique,
- un onduleur/redresseur 21 comprenant ici trois bras de commutation 7, montés en parallèle et dont le fonctionnement sera décrit ci-après, et
- trois cellules inductives primaires 10 dont le fonctionnement sera décrit ci-après. Dans l'exemple considéré, ces trois cellules inductives primaires 10 sont disposées selon un montage en étoile.

Le réseau électrique 5 est ici représenté sous la forme d'un réseau de tension continue mais il peut en variante s'agir d'un réseau de tension alternative fournissant par exemple une tension efficace nominale de 230V avec une fréquence de 50 Hz ou 60 Hz. Un tel réseau électrique de tension alternative peut être monophasé ou triphasé. D'autres tensions sont possibles, par exemple une tension monophasée de valeur efficace de 120 V et de fréquence de 60Hz, une tension biphasée de valeur efficace de 208 V et de fréquence de 60 Hz ou encore une tension triphasée de 240 V et de fréquence de 60 Hz, cette liste n'étant pas exhaustive. Dans le cas où le réseau fournit une tension alternative, un autre onduleur/redresseur non représenté est prévu entre le réseau et l'onduleur/redresseur 21, cet autre onduleur/redresseur assurant par exemple une fonction de correction du facteur de puissance.

Comme on peut le voir sur la Figure 1, un condensateur 15 peut être disposé en parallèle des trois bras de commutation 7. Ce dernier présente par exemple une capacité comprise entre $1\mu F$ et 1mF, par exemple de $10\mu F$.

Chaque bras 7 du sous-circuit primaire 4 comprend ici deux interrupteurs électroniques commandables 12, tels que des transistors MOSFET, IGBT ou bipolaires, ou des thyristors, disposés de part et d'autre d'un point milieu 8. Les deux interrupteurs 12 d'un même bras de commutation 7 sont ici commandés à l'aide d'un même rapport cyclique, l'un en opposition de l'autre avec un temps mort par l'unité de contrôle 3.

Un premier bras 7 comprend ainsi deux interrupteurs électroniques commandables 12 et un premier point milieu 8 auquel une première borne 18 de la première cellule inductive primaire 10 (qui constitue aussi une borne du montage en étoile des cellules inductives primaires 10) est connectée sans l'intermédiaire d'une inductance, et ces deux interrupteurs électroniques commandables 12 sont commandés selon un rapport cyclique $\alpha_1$.

Un deuxième bras 7 comprend ainsi deux interrupteurs électroniques commandables 12 et un deuxième point milieu 8 auquel une première borne 18 de la deuxième cellule inductive primaire 10 (qui constitue aussi une borne du montage en étoile des cellules inductives primaires 10) est connectée sans l'intermédiaire d'une inductance et ces deux interrupteurs électroniques commandables 12 sont commandés selon un rapport cyclique $\alpha_2$.

Un troisième bras 7 comprend ainsi deux interrupteurs électroniques commandables 12 et un troisième point milieu 8 auquel une première borne 18 de la troisième cellule inductive primaire 10 (qui constitue aussi une borne du montage en étoile des cellules inductives primaires 10) est connectée sans l'intermédiaire d'une inductance, et ces deux interrupteurs électroniques commandables 12 sont commandés selon un rapport cyclique $\alpha_3$.

Comme on peut le voir sur la figure 1, chaque cellule inductive primaire 10 peut être formée par l'association en série : d'une inductance permettant la génération d'énergie magnétique, et d'un condensateur, pour former une cellule résonante. L'inductance a par exemple une valeur comprise entre $10\mu H$ et 10mH et le condensateur a une capacité comprise entre 10 nF et 1 mF. L'inductance est par exemple réalisée en fil de Litz.

Dans une variante non représentée, chaque cellule inductive primaire 10 est formée par une inductance uniquement. Aucun condensateur physique n'est présent, la présence en série de ce condensateur avec l'inductance de la cellule inductive primaire 10 étant émulée par la commande des bras de commutation 7 par l'unité de contrôle primaire 3 à l'aide des rapports cycliques $\alpha_1$, $\alpha_2$ et $\alpha_3$. Ici encore, l'inductance est par exemple réalisée en fil de Litz.

Les deuxièmes bornes 19 des cellules inductives primaires 10 sont ici reliées entre elles de façon à définir un point neutre.

On va maintenant décrire un exemple de sous-circuit secondaire 6 en référence à la figure 1. Ce sous-circuit secondaire 6 comprend trois cellules inductives secondaires 20 pour l'échange d'énergie sans contact avec une cellule inductive primaire 10 respective, et un onduleur/redresseur 23, apte à réaliser une adaptation de l'impédance équivalente sur son entrée alternative (donc du côté des cellules inductives secondaires 20), de manière à faire varier cette impédance indépendamment de l'impédance de l'unité de stockage d'énergie électrique 2. La tension aux bornes de chaque cellule inductive secondaire 20 peut alors être égale au produit de la tension aux bornes de l'unité de stockage d'énergie électrique 2 par le rapport cyclique appliqué pour redresser la tension aux bornes de ladite cellule inductive secondaire.

Les trois cellules inductives secondaires 20 sont ici montées en étoile.

L'onduleur/redresseur 23 comprend dans l'exemple décrit trois bras de commutation 24 disposés en parallèle, chaque bras comprenant ici deux interrupteurs électroniques commandables 12 disposées de part et d'autre d'un point milieu 25.

Chaque bras 24 du sous-circuit secondaire 6 comprend ici deux interrupteurs électroniques commandables 12, tels que des transistors MOSFET, IGBT ou bipolaires, ou des thyristors, disposés de part et d'autre d'un point milieu 25. Les deux interrupteurs 12 d'un même bras de commutation 24 sont ici commandés à l'aide d'un même rapport cyclique, l'un en opposition de l'autre avec un temps mort par l'unité de contrôle 3.

Un premier bras 24 comprend ainsi deux interrupteurs électroniques commandables 12 et un premier point milieu 25 auquel une première borne 26 de la première cellule inductive secondaire 20 (qui constitue aussi une borne du montage en étoile des cellules inductives secondaires 20) est connectée sans l'intermédiaire d'une inductance, et ces deux interrupteurs électroniques commandables 12 sont commandés selon un rapport cyclique $\alpha_4$.

Un deuxième bras 24 comprend ainsi deux interrupteurs électroniques commandables 12 et un deuxième point milieu 25 auquel une première borne 26 de la deuxième cellule inductive secondaire 20 (qui constitue aussi une borne du montage en étoile des cellules inductives secondaires 20) est connectée sans l'intermédiaire d'une inductance et ces deux interrupteurs électroniques commandables 12 sont commandés selon un rapport cyclique $\alpha_5$.

Un troisième bras 24 comprend ainsi deux interrupteurs électroniques commandables 12 et un troisième point milieu 25 auquel une première borne 26 de la troisième cellule inductive secondaire 20 (qui constitue aussi une borne du montage en étoile des cellules inductives secondaires 20) est connectée sans l'intermédiaire d'une inductance et ces deux interrupteurs électroniques commandables 12 sont commandés selon un rapport cyclique $\alpha_6$.

Les deuxièmes bornes 27 des cellules inductives secondaires 20 sont ici reliées entre elles de façon à définir un point neutre.

Comme on peut le voir sur la figure 1, chaque cellule inductive secondaire 20 peut être formée par l'association en série : d'une inductance permettant la génération d'énergie magnétique, et d'un condensateur, pour former une cellule résonante. L'inductance a par exemple une valeur comprise entre $10\mu H$ et $10mH$ et le condensateur a une capacité comprise entre 10 nF et 1 mF. L'inductance est par exemple réalisée en fil de Litz.

Dans l'exemple considéré, une cellule inductive primaire 10 échange sans contact de l'énergie électrique par couplage inductif avec une cellule inductive secondaire 20, et chaque couple cellule inductive primaire 10 / cellule inductive secondaire 20 présente une même fréquence de résonance égale à 85 kHz, et l'échange d'énergie électrique sans contact par couplage inductif se fait à cette fréquence de résonance et selon un coefficient de couplage k.

L'unité de contrôle 3 agit dans l'exemple décrit sur la commande de l'onduleur/redresseur 23 de manière à faire varier l'impédance équivalente $R_{Ref}$ sur l'entrée alternative, indépendamment de l'impédance sur la sortie continue de cet onduleur/redresseur 23. Chaque cellule inductive secondaire 20 est alors chargée par une impédance équivalente $R_{Ref}$.

Pour chaque cellule inductive secondaire 20, l'impédance équivalente $R_{Ref}$ est représentée par le ratio V/I où V est la tension composée et I l'intensité du courant de ligne.

$R_{Ref}$ a par exemple une valeur comprise entre 0,1 '$\Omega$ et 100 '$\Omega$, notamment entre 5'$\Omega$ et 30'$\Omega$. Pour une configuration de recharge donnée, cette configuration étant notamment déterminée par l'un au moins parmi : la position du sous-circuit secondaire 6 par rapport au sous-circuit primaire 4 et/ou le niveau de puissance à transmettre et/ou la tension aux bornes de l'unité de stockage d'énergie électrique 2, $R_{Ref}$ peut avoir une valeur fixe et cette valeur est par exemple dans la plage précitée. D'une configuration de charge à l'autre, par exemple en cas d'éloignement plus important entre le sous-circuit primaire 4 et le sous-circuit secondaire 6 et/ou pour tenir compte du vieillissement du système, la valeur de $R_{Ref}$ peut être modifiée, restant notamment dans la plage précitée.

On va maintenant décrire, en référence à la figure 2 un sous-circuit secondaire 6 selon une variante de ce qui vient d'être décrit pour ce premier exemple de mise en œuvre.

Ce sous-circuit secondaire diffère de celui qui vient d'être décrit par le fait que l'onduleur/redresseur 23 ne comprend plus trois bras de commutation 24, mais six bras de commutation 24. Chaque première borne 26 d'une cellule inductive secondaire 20 est alors reliée à deux points milieux 25 de deux bras de commutation 24 par l'intermédiaire de deux inductances 28. Chaque inductance 28 a par exemple la même valeur comprise entre 100nH et 10µH. Les deux inductances 28 associées à une même première borne 26 d'une cellule inductive secondaire 20 présentent par exemple un noyau commun, étant alors couplées, ou elles ont chacune un noyau propre.

L'onduleur/redresseur 23 de la figure 2 est par exemple commandé comme suit par l'unité de contrôle 3, pour réaliser l'adaptation d'impédance sur l'entrée alternative de l'onduleur/redresseur 23 lors de la charge de l'unité de stockage d'énergie électrique 2.

Pour chaque cellule inductive secondaire 20, l'unité de contrôle 3 commande les deux bras 24 dont le point milieu 25 est relié à la première borne 26 de cette cellule inductive secondaire 20 a de manière à ce qu'ils commutent à une même fréquence et avec un décalage de phase de 180° d'un premier bras à l'autre. Chacun de ces deux bras 24 commute par exemple à une fréquence de 425 kHz.

Deux bras 24 associés à la première cellule inductive secondaire 20 sont par exemple commandés selon le rapport cyclique $\alpha_4$, deux bras 24 associés à la deuxième cellule inductive secondaire 20 sont commandés selon un rapport cyclique $\alpha_5$, et deux bras 24 associés à la troisième cellule inductive secondaire 20 sont commandés selon un rapport cyclique $\alpha_6$, et ces rapports cycliques sont choisis de manière à imposer l'impédance $R_{Ref}$ de sorte que:

$$[\text{Math1}] \; v_{c4} = R_{Ref} \times \frac{I_4 - I_5}{2} = (\alpha_4 - \alpha_5) \times V_{batt}$$

$$[\text{Math2}] \; v_{c5} = R_{Ref} \times \frac{I_5 - I_6}{2} = (\alpha_5 - \alpha_6) \times V_{batt}$$

$$[\text{Math3}] \; v_{c6} = R_{Ref} \times \frac{I_6 - I_4}{2} = (\alpha_6 - \alpha_4) \times V_{batt}$$

où $v_{c4}$, $v_{c5}$ et $v_{c6}$ correspondent aux tensions composées entre les phases respectives.

Le circuit 1 des figures 1 et 2 peut permettre une charge du réseau électrique 5 ou de toute autre charge électrique côté réseau depuis l'unité de stockage d'énergie électrique 2. Cette réversibilité est permise par le fait que l'onduleur/redresseur 7 et l'onduleur/redresseur 23 présentent la même structure. Notamment, dans le cas de la figure 2, des inductances similaires aux inductances 28 peuvent être disposées entre la première borne 18 des cellules inductives primaires 10 et chaque point milieu 8 d'un bras de commutation 7 auquel cette première borne 18 est reliée.

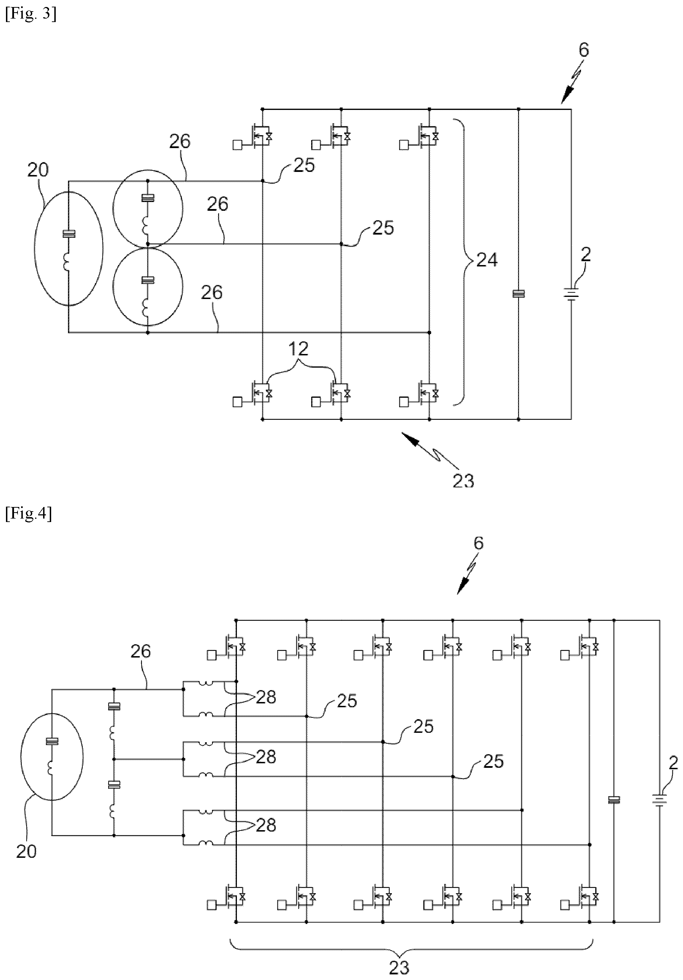

On va maintenant décrire en référence aux figure 3 et 4 deux variantes d'un sous-circuit secondaire 6 selon un deuxième exemple de mise en œuvre de l'invention.

Ce deuxième exemple de mise en œuvre diffère du premier exemple par le fait que les trois cellules inductives secondaires 20 (et similairement les trois cellules inductives primaires 10, bien que cela ne soit pas représenté sur les figures 3 et 4) sont disposées selon un montage en triangle.

Selon une première variante de ce deuxième exemple de mise en œuvre, et similairement à ce qui a été décrit en référence à la première variante du premier exemple de mise en œuvre de la figure 1, l'onduleur/redresseur 23 comprend uniquement trois bras de commutation 24, et chaque borne du montage en triangle est connectée à un point milieu respectif 25 d'un des bras de commutation 24 sans l'interposition d'une inductance.

Selon une deuxième variante de ce deuxième exemple de mise en œuvre, et similairement à ce qui a été décrit en référence à la deuxième variante du premier exemple de mise en œuvre de la figure 2, l'onduleur/redresseur comprend six bras de commutation 24, et chaque borne 26 du montage en étoile peut être connectée à deux points milieux respectifs 25 de deux bras de commutation 24 avec interposition d'une inductance 28. Deux inductances 28 sont par exemple associées à chaque borne du montage en triangle, chacune desdites bornes est alors reliée :

- par l'une de ces deux inductances 28 au point milieu 25 d'un des deux bras de commutation 24, et
- par l'autre de ces deux inductances au point milieu de l'autre des deux bras de commutation.

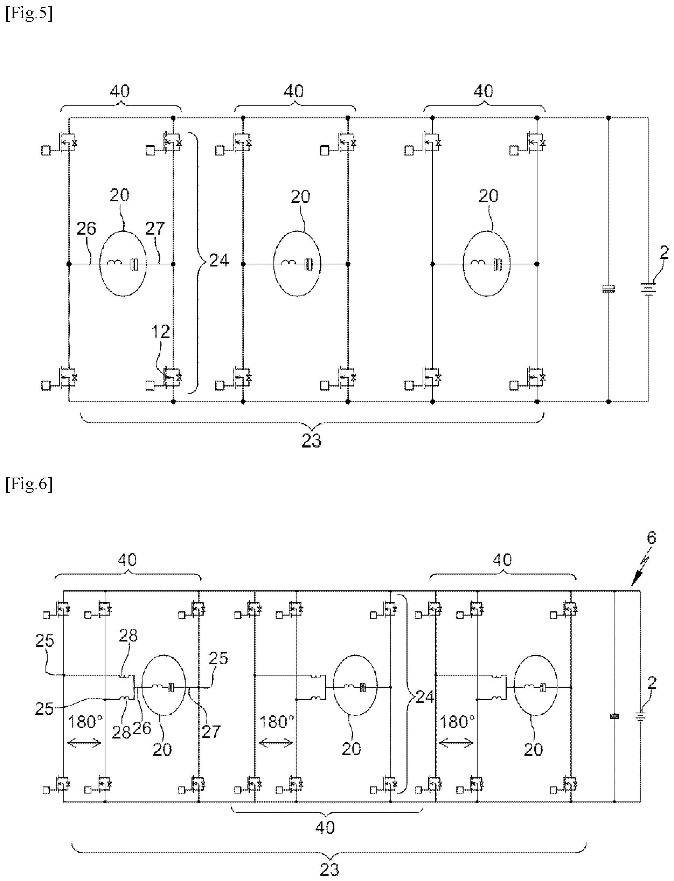

On va maintenant décrire en référence à la figure 5 un sous-circuit secondaire 6 selon un troisième exemple de mise en œuvre de l'invention. Selon ce troisième exemple, les cellules inductives secondaires 20 ne sont montées ni en étoile, ni en triangle mais elles sont montées de façon indépendante via des ponts en H dédiés auxdites cellules inductives secondaires. Dans cet exemple, trois ponts en H 40 sont prévus et chaque pont en H 40 est constitué de deux bras de commutation 24. Chaque cellule inductive secondaire 20 est montée entre les points milieux 25 des deux bras de commutation 24 du pont en H 40 dédié à cette dernière sans l'interposition d'une inductance. Le sous-circuit primaire 4 peut, selon ce troisième exemple de mise en œuvre, présenter une structure symétrique à celle représentée sur la figure 5.

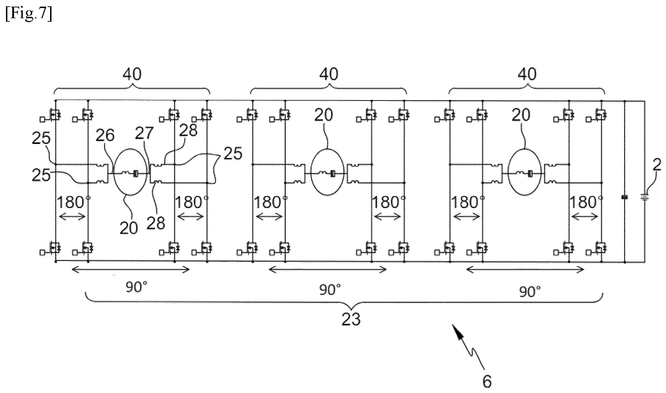

On va maintenant décrire en référence aux figures 6 et 7 un sous-circuit secondaire 6 selon deux variantes d'un quatrième exemple de mise en œuvre de l'invention.

Selon la première variante de la figure 6, l'onduleur/redresseur 23 définit trois ponts en H 40. Chaque pont en H 40 est ici constitué par trois bras de commutation 23, et il est dédié à une cellule inductive secondaire 20. Cette cellule inductive secondaire 20 a :

- une première borne 26 reliée à deux points milieux 25 respectifs de deux des trois bras de commutation du pont en H 40 avec interposition d'une inductance 28, et
- une deuxième borne 27 reliée au point milieu 25 de l'autre des trois bras de commutation du pont en H 40 sans l'interposition d'une inductance.

Il y a ainsi deux inductances 28 par pont en H 40, et seule une borne par cellule inductive secondaire 20 est reliée à des points milieux via une inductance respective 28.

Selon la variante de la figure 7, chaque pont en H 40 est constitué par quatre bras de commutation 24 et il est dédié à une cellule inductive secondaire 20. Cette cellule inductive secondaire a :

- une première borne 26 reliée à deux points milieux 25 respectifs de deux des quatre bras de commutation du pont en H avec interposition d'une inductance 28, et
- une deuxième borne 27 reliée à deux points milieux respectifs 25 de deux autres des quatre bras de commutation du pont en H avec interposition d'une inductance 28.

Il y a ainsi quatre inductances 28 par pont en H 40. Pour chaque cellule inductive 20, chaque borne 26, 27 est reliée à des points milieux via une inductance respective 28.

L'invention n'est pas limitée à l'exemple qui vient d'être décrit. En particulier, bien qu'une unique unité de contrôle 3 soit représentée, d'autres réalisations sont possibles, par exemple la possibilité qu'une unité de contrôle soit dédiée à la commande du sous-circuit primaire 4 et qu'une autre unité de contrôle soit dédiée à la commande du sous-circuit secondaire 6.

Par ailleurs, bien que cela ne soit pas représenté, dans l'exemple des figures 1, 3 et 5, chaque bras de commutation 24 peut, à la place d'un seul interrupteur électronique commandable 12 disposé de chaque côté d'un point milieu 25, comprendre plusieurs interrupteurs électroniques commandables 12 disposés en parallèle, de chaque côté du point milieu 25.

## Revendications

1. Sous-circuit secondaire (6) pour l'alimentation électrique d'une unité de stockage d'énergie électrique (2), ce sous-circuit secondaire étant apte à échanger sans contact par couplage inductif de l'énergie électrique avec un sous-circuit primaire (4) apte à être connecté à un réseau de tension, et ce sous-circuit secondaire étant également apte à être connecté à une unité de stockage d'énergie électrique, ce sous-circuit secondaire (6) comprenant :

   - trois cellules inductives secondaires (20), aptes à échanger chacune de l'énergie électrique sans contact par couplage inductif avec une cellule inductive primaire (10) respective du sous-circuit primaire,
   - un onduleur/redresseur (23), recevant sur son entrée alternative la tension triphasée correspondant aux trois cellules inductives secondaires (20) et recevant sur son entrée continue une tension apte à être connectée aux bornes de l'unité de stockage d'énergie électrique (2), l'onduleur/redresseur (23) comprenant une pluralité de bras de commutation (24) montés en parallèle, chaque bras de commutation (24) comprenant deux interrupteurs électroniques commandables (12) montés de part et d'autre d'un point milieu (25), et
   - une unité de contrôle (3) configurée pour commander les interrupteurs électroniques commandables (12) des bras de commutation (24) de manière à réaliser une adaptation d'impédance de l'impédance sur l'entrée alternative de cet onduleur/redresseur (23), indépendamment de l'impédance de l'unité de stockage d'énergie électrique (2).

2. Sous-circuit secondaire selon la revendication 1, les trois cellules inductives secondaires (20) étant disposées selon un montage en étoile.

3. Sous-circuit secondaire selon la revendication 2, l'onduleur/redresseur (23) comprenant trois bras de commutation (24), chaque borne du montage en étoile étant connectée à un point milieu (25) respectif d'un des bras de commutation (24) sans l'interposition d'une inductance.

4. Sous-circuit secondaire selon la revendication 2, l'onduleur/redresseur (23) comprenant six bras de commutation (24), chaque borne du montage en étoile étant connectée à deux points milieux (25) respectifs de deux bras de commutation (24) avec interposition d'une inductance (28).

5. Sous-circuit secondaire selon la revendication 1, les trois cellules inductives secondaires (20) étant disposées selon un montage en triangle.

6. Sous-circuit secondaire selon la revendication 5, l'onduleur/redresseur (23) comprenant trois bras de commutation (24) chaque borne du montage en triangle étant connectée à un point milieu (25) respectif d'un des bras de commutation sans l'interposition d'une inductance (28).

7. Sous-circuit secondaire selon la revendication 5, l'onduleur/redresseur (23) comprenant six bras de commutation (24), chaque borne du montage en étoile étant connectée à deux points milieux (25) respectifs de deux bras de commutation (24) avec interposition d'une inductance (28).

8. Sous-circuit secondaire (6) selon la revendication 1, l'onduleur/redresseur (23) définissant trois ponts en H (40), chaque pont en H (40) comprenant deux bras de commutation (24) et étant dédié à une cellule inductive secondaire (20), la cellule inductive secondaire (20) étant montée entre les points milieux (25) des deux bras de commutation d'un pont en H (40) respectif sans l'interposition d'une inductance (28).

9. Sous-circuit secondaire selon la revendication 1, l'onduleur/redresseur (23) définissant trois ponts en H (40), chaque pont en H (40) comprenant trois bras de commutation (24), et étant dédié à une cellule inductive secondaire (20), ladite cellule inductive secondaire (20) ayant :

- une première borne (26) reliée à deux points milieux (25) respectifs de deux des trois bras de commutation du pont en H avec interposition d'une inductance (28), et
- une deuxième borne (27) reliée au point milieu (25) de l'autre des trois bras de commutation du pont en H sans l'interposition d'une inductance.

10. Sous-circuit secondaire selon la revendication 1, l'onduleur/redresseur (23) définissant trois ponts en H (40), chaque pont en H comprenant quatre bras de commutation (24) et étant dédié à une cellule inductive secondaire (20), ladite cellule inductive secondaire ayant :

- une première borne (26) reliée à deux points milieux respectifs de deux des quatre bras de commutation du pont en H avec interposition d'une inductance (28), et
- une deuxième borne (27) reliée à deux points milieux respectifs de deux autres des quatre bras de commutation du pont en H avec interposition d'une inductance.

11. Sous-circuit secondaire selon l'une quelconque des revendications précédentes, chaque cellule inductive secondaire (20) présentant une fréquence de résonance comprise entre 79 kHz et 90 kHz, étant notamment égale à 85 kHz.

12. Circuit d'alimentation électrique (1) d'une unité de stockage d'énergie électrique (2), ce circuit d'alimentation électrique comprenant :

- un sous-circuit primaire (4), apte à être connecté à un réseau de tension (5), et
- le sous-circuit secondaire (6) selon l'une quelconque des revendications précédentes,

le sous-circuit primaire comprenant :

- trois cellules inductives primaires (10) pour l'échange sans contact par couplage inductif d'énergie électrique avec une cellule inductive secondaire (20) respective du sous-circuit secondaire (6), et
- un onduleur/redresseur (21) comprenant au moins trois bras de commutation (7), chaque bras de commutation (7) comprenant deux interrupteurs électroniques commandables (12) disposés de part et d'autre d'un point milieu (8).

13. Composant pour l'alimentation électrique d'une unité de stockage d'énergie électrique (2), comprenant le circuit électrique (1) selon la revendication 12, le composant définissant notamment une structure supportant de manière rigidement couplés entre eux le sous-circuit primaire (4) et le sous-circuit secondaire (6).

14. Dispositif pour l'alimentation électrique d'une unité de stockage d'énergie électrique (2), comprenant :

- le circuit électrique selon la revendication 12,
- une borne de charge pour véhicule hybride ou électrique, dans laquelle est disposé le sous-circuit primaire (4) du circuit électrique (1) ou à laquelle est électriquement connecté le sous-circuit primaire (4), et
- un composant apte à être embarqué dans un véhicule hybride ou électrique, dans lequel est disposé le sous-circuit secondaire (6) du circuit électrique (1).

[Fig. 1]

[Fig. 2]

[Fig. 3]

[Fig.4]

[Fig.5]

[Fig.6]

[Fig.7]

Europäisches
Patentamt

European
Patent Office

Office européen
des brevets

## RAPPORT DE RECHERCHE EUROPEENNE

**Numéro de la demande**

EP 25 18 6074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/085652 A1 (PRIES JASON L [US] ET AL) 17 mars 2022 (2022-03-17) | 1-3,5,6, 11-14 | INV. H02J7/02 |
| Y | * figures 1,10A,12 *<br>----- | 4,7-10 | B60L53/12 H02J50/12 |
| X | US 2015/207335 A1 (MADAWALA UDAYA KUMARA [NZ] ET AL) 23 juillet 2015 (2015-07-23) * figures 1,5,6a,6b *<br>----- | 1-3,5,6, 11-14 | H02M1/00 H02M7/219 H02M7/5387 |
| X | WO 2022/024237 A1 (MITSUBISHI ELECTRIC CORP [JP]) 3 février 2022 (2022-02-03) * figures 1,2a,2b *<br>----- | 1-3,5,6, 11-14 | |
| X | US 2012/032633 A1 (CORDES RALF [DE] ET AL) 9 février 2012 (2012-02-09) * figure 4 *<br>----- | 1-3, 11-14 | |
| Y | WO 2013/093287 A2 (VALEO SYS CONTROLE MOTEUR SAS [FR]) 27 juin 2013 (2013-06-27) * page 13, ligne 24 - page 14, ligne 6; figure 2 *<br>----- | 4,7-10 | |

**DOMAINES TECHNIQUES RECHERCHES (IPC)**

H02J
B60L
H02M

Le présent rapport a été établi pour toutes les revendications

| Lieu de la recherche | Date d'achèvement de la recherche | Examinateur |
|---|---|---|
| Munich | 22 octobre 2025 | Tchegho Kamdem, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 18 6074

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2025

| Document brevet cité au rapport de recherche | Date de publication | Membre(s) de la famille de brevet(s) | | Date de publication |
|---|---|---|---|---|
| US 2022085652 A1 | 17-03-2022 | CA | 3125006 A1 | 09-07-2020 |
| | | EP | 3906605 A2 | 10-11-2021 |
| | | US | 2022085652 A1 | 17-03-2022 |
| | | US | 2024258831 A1 | 01-08-2024 |
| | | WO | 2020142621 A2 | 09-07-2020 |
| US 2015207335 A1 | 23-07-2015 | CN | 104838578 A | 12-08-2015 |
| | | EP | 2891242 A1 | 08-07-2015 |
| | | JP | 6764649 B2 | 07-10-2020 |
| | | JP | 2015527048 A | 10-09-2015 |
| | | KR | 20150103651 A | 11-09-2015 |
| | | KR | 20210005752 A | 14-01-2021 |
| | | KR | 20220150404 A | 10-11-2022 |
| | | US | 2015207335 A1 | 23-07-2015 |
| | | WO | 2014035260 A1 | 06-03-2014 |
| WO 2022024237 A1 | 03-02-2022 | CN | 115769463 A | 07-03-2023 |
| | | JP | 6869446 B1 | 12-05-2021 |
| | | JP | WO2022024237 A1 | 03-02-2022 |
| | | WO | 2022024237 A1 | 03-02-2022 |
| US 2012032633 A1 | 09-02-2012 | CN | 102387935 A | 21-03-2012 |
| | | EP | 2416982 A1 | 15-02-2012 |
| | | US | 2012032633 A1 | 09-02-2012 |
| | | WO | 2010115867 A1 | 14-10-2010 |
| WO 2013093287 A2 | 27-06-2013 | EP | 2794343 A2 | 29-10-2014 |
| | | EP | 3412500 A1 | 12-12-2018 |
| | | FR | 2985104 A1 | 28-06-2013 |
| | | FR | 2985105 A1 | 28-06-2013 |
| | | HU | E046456 T2 | 30-03-2020 |
| | | HU | E058195 T2 | 28-07-2022 |
| | | WO | 2013093287 A2 | 27-06-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3156077
- FR 2404802
- FR 3149443
- FR 3152754